# EUROPÄISCHE PATENTSCHRIFT

(11) **EP 2 888 148 B1**
(45) Veröffentlichungstag und Bekanntmachung des Hinweises auf die Patenterteilung: **14.06.2017**
(21) Anmeldenummer: 13752893.1
(22) Anmeldetag: 22.08.2013
(51) Int. Cl.: B62B 3/14

(54) **SCHIEBEGRIFF FÜR EINEN EINKAUFSWAGEN**
HANDLE FOR A SHOPPING CART
POIGNÉE POUR UN CHARIOT DE SUPERMARCHÉ

(30) Priorität: 22.08.2012 DE 102012107754
(43) Veröffentlichungstag der Anmeldung: 01.07.2015
(73) Patentinhaber: FILOSI, Andreas, 82178 Puchheim (DE); Wieth, Franz, 82178 Puchheim (DE)
(72) Erfinder: SONNENDORFER, Horst, 82178 Puchheim (DE); WIETH, Franz, 82178 Puchheim (DE)
(74) Vertreter: Braun-Dullaeus Pannen Patent- und Rechtsanwälte
(86) Internationale Anmeldenummer: PCT/EP2013/067462
(87) Internationale Veröffentlichungsnummer: WO 2014/029844

(56) Entgegenhaltungen:
- WO-A1-2010/099772
- FR-A1- 2 738 937
- JP-A- 2002 259 683

## Beschreibung

Die Erfindung betrifft einen Schiebegriff für einen Einkaufswagen, wobei am Schiebegriff ein Pfandschloss gehalten ist, das eine Öffnung zur Eingabe des Pfandes aufweist, und wobei der Schiebgriff eine Aufnahme für ein Telekommunikationsendgerät umfasst. Des Weiteren betrifft die Erfindung eine Anordnung zur Verdeckung einer Öffnung für die Eingabe eines Pfandes. Eine Kombination aus einem Schiebegriff für einen Einkaufswagen und einem Pfandschloss wird von der WO 2010/099772 A1 und von der FR 2 738 937 A1 gezeigt.

Von Hand bewegbare Einkaufswagen werden üblicherweise in einem Geschäft, also im öffentlichen Raum eingesetzt und dort an Sammelstellen bereitgestellt. Sie werden von ständig wechselnden Personen genutzt, die sich ihrer bedienen, um die im Geschäft ausgewählten Waren transportieren zu können. Nach dem Einkauf und dem Umladen der gekauften Waren in Transporttüten bzw. in das zur Anfahrt genutzte KFZ benötigen sie ihn nicht mehr und könnten ihn einfach achtlos stehen lassen.
Um zu verhindern, dass die Einkaufswagen nach dem Einkauf nicht an eine der Sammelstellen zurückgebracht werden oder sogar zum Transport der eingekauften Waren nach Hause genutzt werden, sind die Schiebegriffe der Einkaufswagen mit einem Pfandschloss ausgerüstet. Bei einem derart ausgestatteten Schiebegriff muss der Kunde ein Pfand in das Pfandschloss einführen. Erst dann lässt sich der im Pfandschloss gehaltenen Schlüssel lösen und der Einkaufswagen aus der Sammelstelle entfernen. Der Kunde bekommt sein Pfand nur zurück, wenn er nach Erledigung seines Einkaufs den Einkaufswagen wieder in die Sammelstelle zurückbringt und das Pfandschloss wieder mit einem der angeketteten Schlüssel verbindet. Diese Prozedur haben die Kunden akzeptiert und sich daran gewöhnt.
Mittlerweile tragen viele Personen quasi ständig ein modernes mobiles Telekommunikationsendgerät, ein sogenanntes Smartphone, mit sich. Auch für den Einkauf sind viele über das Smartphone verfügbare Funktionen von Nutzen sein. Neben dem Wunsch nach ständigen Erreichbarkeit können diverse auf Ihnen laufende Applikationen den Kunden bei seinem Einkauf unterstützen. Es sind Apps verfügbar, die Einkaufszettel ersetzen, Preise vergleichen, Zutaten von bestimmten Produkten auflisten oder sogar den Bezahlvorgang unterstützen. Dabei kann die ausgesuchte Ware ganz einfach über die Smartphone eigene Kamera per Barcode eingescannt werden.
Der Kunde möchte sein Smartphone selbstverständlich auch beim Einkauf ständig in Reichweite haben beziehungsweise es bedienen. Er benötigt aber gleichzeitig freie Hände, um ihn interessierende Waren aus dem Regal nehmen bzw. sie in den Einkaufswagen legen zu können. Zudem muss er den Einkaufswagen während seines Einkaufs auch immer wieder lenken und bewegen.
Um dem Kunden die Bedienung seines Smartphones während des Einkaufs zu erleichtern, sind Schiebegriffe bekannt, an denen eine Halterung für das Smartphone befestigt ist. Der Kunde hat so seine Hände frei und gleichzeitig sein in der Halterung befindliches Smartphone in ständiger Erreichbarkeit. Diese an sich gute Lösung hat aber einen Nachteil, da der Kunde durch die von ihm während des Einkaufs und beim Verladen der Waren erforderlichen Handlungen ständige Ablenkung erfährt. Es kommt nicht selten vor, dass ein Kunde Ware im Einkaufswagen vergisst oder seinen Schlüssel beim Einladen auf dem Autodach liegen lässt. Es kommt auch durchaus vor, dass der Kunde beim Zurückbringen des Einkaufswagens vergisst, sein in der Halterung befindliches Smartphone zu entnehmen. Neben dem Verlust des immer noch recht teuren Geräts ist damit auch der Verlust der auf dem Smartphone gespeicherten persönlichen Daten zu beklagen.
Aufgabe der vorliegenden Anmeldung ist es, einen Schiebegriff für einen Einkaufswagen vorzuschlagen, der einer den Einkaufswagen nutzenden Person einen zusätzlichen Anreiz gibt, sein am Schiebegriff gehaltenes Smartphone nach dem Einkauf wieder zu entnehmen.

Diese Aufgabe wird gelöst durch eine Kombination aus einem Schiebegriff für einen Einkaufswagen und einem Pfandschloss gemäß Anspruch 1. Vorteilhafte Ausführungsformen des Schiebegriffs werden in den Unteransprüchen genannt. Mit Anspruch 10 wird eine Anordnung von erfindungsgemäßen Schiebegriff und mobilem Telekommunikationsgrundgerät gefasst.

Ein wesentlicher Grundgedanke der Erfindung ist es, das mittlerweile vom Kunden gewohnte und verinnerlichte Zurückbringen des Einkaufswagens an die Sammelstelle zur Entnahme des Pfandes zu nutzen, um den Kunden zur Entnahme seines Smartphones aus der Aufnahme am Schiebegriff zu bewegen. Hierfür wird die Aufnahme für das mobile Telekommunikationsendgerät derart am Schiebegriff positioniert, dass sie auf der dem Einkaufswagen abgewandten Seite des Schiebegriffs vor dem Pfandschloss angeordnet ist. Das Pfandschloss weist auf der dem Einkaufswagen abgewandten Seite des Schiebegriffs die Öffnung für das Pfand auf, so dass die Aufnahme für das mobile Telekommunikationsendgerät vom den Einkaufswagen am Schiebegriff schiebenden Kunden gesehen vor der Öffnung angeordnet ist. Ein in der Aufnahme gehaltenes mobiles Telekommunikationsendgerät ist damit aus Sicht des den Schiebegriff fassenden Kunden zwischen Pfandschloss und Kunde positioniert. Es deckt somit die Öffnung des Pfandschlosses ab. In dieser Position verhindert oder zumindest behindert das mobile Telekommunikationsendgerät einen Zugriff auf das Pfand. Der Kunde ist durch die erfindungsgemäße Anordnung der Aufnahme vor dem Pfandschloss gehalten, sein in der Aufnahme steckendes mobile Telekommunikationsendgerät zu entnehmen, um auch das Pfand entnehmen zu können. Die vom Kunden gewohnte Entnahme des Pfandes wird so mit der Entnahme des Smartphones aus der Halterung am Schiebegriff verknüpft.

Von Vorteil ist es, wenn die Aufnahme für das mobile Telekommunikationsendgerät durch eine im Schiebegriff gebildete Vertiefung ausgebildet ist. Die Vertiefung kann bereits bei der Formung des Schiebegriffs ausgebildet werden. Die die Aufnahme bildenden Wandungen sind demzufolge ein elementarer Teil des Schiebegriffs. Eine ansonsten erforderliche spätere Montage der Aufnahme am Schiebegriff kann so entfallen.

In einer bevorzugten Ausführungsform weist die Vertiefung auf der dem Einkaufswagen abgewandten Seite eine muldenförmige Aussparung auf. Die muldenförmige Aussparung ermöglicht die Bedienung der im unteren Bereich der Bedienfläche des Smartphones angeordneten Schaltflächen. Dieser Teil der Bedienfläche wäre bei in die Vertiefung eingestecktem Smartphone nicht erreichbar.

Von besonderem Vorteil ist es, wenn die muldenförmige Aussparung mittig in der Wandung der Vertiefung angeordnet ist. In diesem Fall wird das Smartphone sicher in der Vertiefung gehalten, die Mulde ermöglicht aber die Bedienung des bei den meisten Smartphones unten und zentral angeordneten Bedienschalter.

Von Vorteil ist es, wenn die beiden längsseitigen Wandungen der Aufnahme in Winkel zur Senkrechten angeordnet sind, so dass ein in der Aufnahme gehaltenes mobiles Telekommunikationsendgerät dem vor dem Schiebegriff stehenden Nutzer des Einkaufswagens zugeneigt ist. Ein derart ausgerichtetes Smartphone lässt sich besonders leicht bedienen und ablesen.

Vorzugsweise ist die Aufnahme in einem waagrechten Abstand zwischen 1 und 2 cm zum Pfandschloss angeordnet. Bei diesem geringen Abstand zwischen Aufnahme und Pfandschloss ist eine Entnahme des Pfandes nur möglich, wenn der Kunde das mobile Telekommunikationsendgerät vorab entnimmt. Der vorgeschlagenen Abstand ist aber ausreichend bemessen, um die Wandung der Aufnahme am Pfandschloss stabil ausformen zu können, was der Haltbarkeit des Schiebegriffs entgegen kommt.

In einer besonders bevorzugten Ausführungsform sind die Aufnahme und das Pfandschloss in eine Ausformung integriert, die am Schiebegriff für zumindest ein Funktionselement, insbesondere ein Werbedisplay, vorgesehen ist. Neben dem eigentlichen Griff verfügen viele Schiebegriffe über separate Bereiche, die speziell für die Aufnahme von Funktionselementen ausgebildet sind. Diese Bereiche können schon bei Herstellung des Schiebegriffs mit ausgebildet oder nachträglich an ihm befestigt werden. Werbedisplays sind flächige Funktionselemente, die gerne an Schiebegriffen vorgesehen werden, um den Kunden neue oder besonders attraktive Angebote unterbreiten zu können. Die erfindungsgemäße Anordnung von Pfandschloss und Aufnahme kann ohne weiteren Aufwand in eine solche Ausformung integriert werden.

Vorzugsweise umfasst die Aufnahme ein seitlich in der Aufnahme angeordnetes, verschieblich gelagertes Begrenzungs-Element. Das verschieblich gelagerte Begrenzungs-Element ermöglicht den sicheren seitlichen Halt verschieden breiter Smartphones in der Aufnahme. Die so ausgebildete Aufnahme ist somit nicht nur für ein bestimmtes Model eines Smartphones geeignet, sondern kann unterschiedliche große Modelle aufnehmen und halten.

Von Vorteil ist es, wenn das verschieblich gelagerte Begrenzungs-Element ein federgespannter Schieber ist. Ein derartiger Schieber drückt das in die Aufnahme eingesetzte Smartphone gegen die gegenüberliegende seitliche Wandung der Aufnahme und ermöglicht durch das Anliegen des Smartphones an der seitlichen Wandung der Aufnahme dessen sicheren Halt auch bei seitlich gegen den Schiebegriff gerichteten Stößen.

In einer bevorzugten Ausführungsform umfasst die Aufnahme an ihrer Längsseite ein Befestigungs-Element, mit dem ein in die Aufnahme gestecktes mobiles Telekommunikationsendgerät gehalten wird. Das längsseitig wirkende Befestigungs-Element ermöglicht es, die Aufnahme an Smartphones verschiedener Stärke respektive Höhe anzupassen. Von Vorteil ist es, wenn das Befestigungs-Element in seiner Schließstellung arretiert werden kann, beispielsweise über einen RastMechanismus. Ein verriegelbares Befestigungs-Element weist vorzugsweise eine Tast zum Entsperren des Elements und damit zur Freigabe des Smartphones auf

In einer besonders bevorzugten Ausführungsform ist das Befestigungs-Element eine exzentrisch gelagerte Walze. Eine solche, an der Längsseite der Aufnahme vorstehende Walze, wird beim Einsetzen des Smartphones in die Aufnahme in eine Drehbewegung versetzt. Ihre exzentrische Lagerung führt dazu, dass die Walze sich mit der Drehbewegung in die Aufnahme hinein verlagert. Dabei wird das Smartphone gegen die der Walze entgegengesetzte Längsseite der Aufnahme gedrückt und so sicher gehalten. Von Vorteil ist es, wenn die Drehbewegung der Walze gegen eine Federkraft erfolgt. Die Federkraft unterstützt dann das Freigeben des Smartphones bei seine Entnahme aus der Aufnahme.

Die erfindungsgemäße Anordnung zur Verdeckung einer Öffnung für die Eingabe eines Pfandes umfasst ein mobiles Telekommunikationsendgerät, welches in der Aufnahme eines Schiebegriffs gemäß einem der beschriebenen Ausführungsformen gehalten ist.

Ein bevorzugte Ausführungsform des erfindungsgemäßen Schiebegriffs und eine Anordnung mit diesem dieses Schiebegriffs und einem Smartphone wird anhand der folgenden Figuren näher erläutert.

Dabei zeigt:
- - Figur 1:: Eine perspektivische schematische Darstellung des Schiebegriffs, bevor das Smartphone in dessen Aufnahme eingesetzt wird,
- - Figur 2:: Eine perspektivische schematische Darstellung des Schiebegriffs mit in die Aufnahme eingesetztem Smartphone, und
- . Figur 3:: Einen teilweisen Schnitt durch die Anordnung gemäß Figur 2 entlang der Linie A

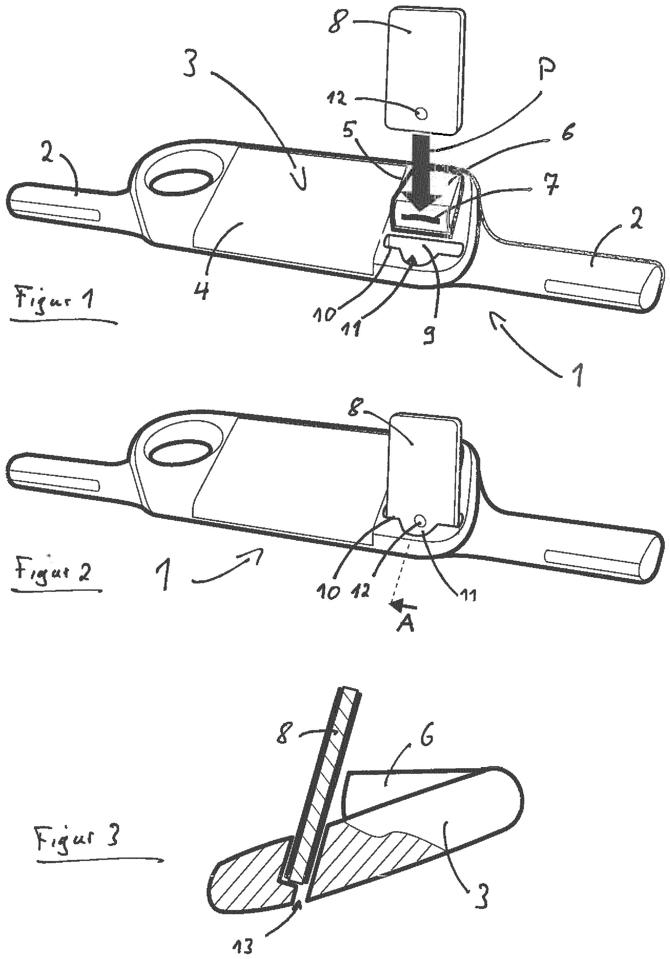

Die Figur 1 zeigt einen Schiebegriff 1 mit zwei jeweils seitlich außen angeordneten Griffabschnitten 2. Zwischen den beiden Griffabschnitten 2 befindet sich eine Ausformung 3, in der dem Schiebegriff 1 zugeordnete Funktionselemente untergebracht sind. Die Aussparung 3 ist derart ausgeformt, das sie am Einkaufswagen montiert eine dem Nutzer des Einkaufswagens zugeneigte Oberfläche aufweist. Zentral in der Ausformung und in deren äußere Form integriert ist ein Werbedisplay 4 angeordnet, dass sich aufgrund der geneigten Oberfläche für den Nutzer gut ablesen lässt. In einem Bereich zwischen einem seitlichen Rand 5 des Werbedisplays 4 und der seitlichen Begrenzung der Ausformung 3 ist ein Münzpfandschloss 6 an der Ausformung 3 befestigt. Das Münzpfandschloss 6 weist an seiner dem Nutzer zugewandten Seite einen Öffnung für die Eingabe eines Pfandes, einen sogenannten Münzschlitz 7 auf. Der Münzschlitz 7 ist demnach auf der dem Einkaufwagen abgewandten Seite des Münzpfandschloss 6 angeordnet. Das Münzpfandschloss 6 ist in die Ausformung 3 teilintegriert, der Münzschlitz 7 ist jedoch frei zugänglich.

Dem Münzpfandschloss 6 aus Nutzersicht vorgelagert ist eine Aufnahme 7 für ein Smartphone 8. Die Aufnahme 9 ist als insgesamt rechteckig ausgeformte Vertiefung in der Ausformung 3 ausgebildet. Aufgrund der geneigten Oberfläche der Ausformung 3 ist die vorgelagerte Aufnahme 9 damit nicht nur vor dem Münzpfandschloss 6, sondern auch unterhalb des Münzschlitzes 7 angeordnet. Die dem Münzpfandschloss 6 abgewandte Wandung 10 der Vertiefung 9 weist eine muldenförmige Aussparung 11 auf.

Ein Pfeil P zeigt die Bewegung, mit der das Smartphone 8 in die Aufnahme 9 eingesetzt wird.

Die Figur 2 zeigt das in die Aufnahme 9 eingesetzte Smartphone 8. Das Smartphone 8 verdeckt den Münzschlitz 7, die Entnahme eines Pfandes ist ohne Entfernung des Smartphones 8 aus der Aufnahme 9 nicht möglich. Die mittig in der dem Münzpfandschloss 6 abgewandten längsseitigen Wandung 10 der Aufnahme 7 angeordnete muldenförmige Aussparung 11 ermöglicht den Zugriff auf den zentralen Betriebsschalter 12 des Smartphones 8, der ansonsten von der Aufnahme 7 verdeckt wäre.

Der von der Figur 3 gezeigte Teilschnitt der Figur 2 entlang der Linie A zeigt, dass die Aufnahme 7 derart ausgeformt ist, dass das in ihr gehaltene Smartphone nicht senkrecht, sondern in einem Winkel zur Senkrechten gehalten wird. Der Winkel stellt das Smartphone an, so dass es besser bedient bzw. abgelesen werden kann. Am Boden der Aufnahme 9 ist eine Öffnung 13 vorgesehen, durch die Flüssigkeiten aus der Aufnahme 9 herauslaufen können.

Ein Becherhalter kann ebenfalls als ein Funktionselement an einem Schiebegriff, insbesondere an einem erfindungsgemäß ausgebildeten Schiebegriff, vorgesehen werden. Ein solcher Becherhalter weist eine meist kreisrunde Öffnung auf, in der üblicherweise nur eine bestimmte Größe von Bechern sicher gehalten werden können. Um diesen Nachteil zu beseitigen, wird auf bekannte Weise ein Passelement in die Öffnung eingesetzt. Das Passelement ermöglicht es, den Radius der Becherhalteröffnung über einen bestimmten Bereich flexibel an den Durchmesser des in den Becherhalter eingesetzten Bechers anzupassen. Das Passelement wird an einer Stelle der Wandung der Becheröffnung gehalten. Es ist federgelagert und drückt den in den Becherhalter eingesetzten Becher gegen die dem Passelement entgegengesetzte Wandung der Öffnung. Der eingesetzte Becher wird so sicher in der Öffnung gehalten. Ein Hin- und Herschwanken in einer für ihn an sich zu großen Öffnung und die damit verbundene Gefahr des Überschwappens der im Becher enthaltenen Flüssigkeit wird verhindert.

Ein Becherhalter an einem Schiebegriff eines Einkaufswagens befindet sich in einem öffentlichen Raum und wird, da am Schiebegriff befestigt, auch mitgeführt, wenn der Nutzer des Einkaufswagens beim Einkaufen kein Getränk bei sich hat. Die Mechanik des Passelements ist im nicht genutzten Becherhalter frei zugänglich und lädt den Nutzer, beispielsweise während der Wartezeit an der Kasse, zum Spielen ein. Dabei kann es vorkommen, dass die Feder durch eine Hin- und Herbewegung des Passelements nicht nur immer wieder gespreizt und gestaucht wird, sondern durch starkes Herunterdrücken des Passelements überdehnt wird. Dabei kann es sogar vorkommen, dass das Passelement bis zum Grund des Becherhalters gedrückt wird und die Feder bricht. Dieses unbedachte Verhalten des Einkaufswagen-Nutzers ist nichts Ungewöhnliche, wenn Personen mit Gegenständen umgehen, die nicht in ihrem Eigentum sind.

Eine überdehnte oder sogar gebrochene Feder kann jedoch ihre Aufgabe nicht mehr erfüllen, der Einkaufswagen muss aufwendig aussortiert und die Feder oder ggf. das ganze Passelement muss ausgetauscht werden. Zur Lösung dieses Problems wird vorgeschlagen, dass Passelement mit einem Überdehnungsschutz für die Feder auszustatten. Hierzu eignet sich ein zapfenförmiger Fortsatz am Passelement, der in einer Nut in der Becherwandung geführt ist. Der Zapfen ist an der dem Becher abgewandten Seite des Passelements angeordnet. Er wird beim Einsetzen des Passelements in die Becheröffnung in die oben am Becherrand offene, in Richtung Becherboden ausgerichtete Nut eingefädelt. Der Zapfen gleitet nun bei einer Bewegung des Passelements durch die Nut. An einem dem Passelement abgewandten Ende des Zapfens befindet sich ein Kopf, dessen Breite bzw. Durchmesser die Breite der Nut übersteigt. Die Länge des Zapfens ist ausreichend bemessen, um die erlaubte Bewegung des Passelements zu ermöglichen. Erst bei Gefahr einer Überdehnung der Feder verhindert der Zapfen durch Anschlag des Kopfes an die Seitenwände der Nut eine weitere Bewegung des Passelements. Die Feder kann somit nicht mehr überdehnt werden.

## Patentansprüche

1. Kombination aus einem Schiebegriff für einen Einkaufswagen und einem Pfandschloss, wobei am Schiebegriff (1) das Pfandschloss (6) gehalten ist, das eine Öffnung (7) zur Eingabe des Pfandes aufweist, und wobei der Schiebegriff (1) eine Aufnahme (9) für ein mobiles Telekommunikationsendgerät (8) umfasst,
**dadurch gekennzeichnet,**
**dass** die Aufnahme (9) für das mobile Telekommunikationsendgerät (8) auf der dem Einkaufswagen abgewandten Seite des Schiebegriffs (1) vor der Öffnung (7) zur Eingabe des Pfandes angeordnet ist.

2. Kombination nach Anspruch 1,
**dadurch gekennzeichnet,**
**dass** die Aufnahme (9) für das mobile Telekommunikationsendgerät (8) durch eine im Schiebegriff (1) gebildete Vertiefung ausgebildet wird.

3. Kombination nach Anspruch 1 oder 2,
**dadurch gekennzeichnet,**
**dass** die Aufnahme (9) auf der dem Einkaufswagen abgewandten Seite eine, insbesondere mittig angeordnete, muldenförmige Aussparung (11) umfasst.

4. Kombination nach einem der vorherigen Ansprüche,
**dadurch gekennzeichnet,**
**dass** die längsseitigen Wandungen (10) der Aufnahme in einem Winkel zur Senkrechten angeordnet sind, so dass ein in der Aufnahme (9) gehaltenes mobiles Telekommunikationsendgerät (8) dem vor dem Schiebegriff (1) stehenden Nutzer des Einkaufswagens zugeneigt ist.

5. Kombination nach Anspruch 4,
**dadurch gekennzeichnet,**
**dass** die Aufnahme (9) und das Pfandschloss (8) in eine Ausformung (3) integriert sind, die am Schiebegriff (1) für ein Funktionselement, insbesondere ein Werbedisplay (4), vorgesehen ist.

6. Kombination nach einem der vorherigen Ansprüche,
**dadurch gekennzeichnet,**
**dass** die Aufnahme (9) ein seitlich in der Aufnahme (9) angeordnetes, verschieblich gelagertes Begrenzungs-Element umfasst.

7. Kombination nach Anspruch 6,
**dadurch gekennzeichnet,**
**dass** das verschieblich gelagerte Begrenzungs-Element ein federgespannter Schieber ist.

8. Kombination nach einem der vorherigen Ansprüche,
**dadurch gekennzeichnet,**
**dass** die Aufnahme (9) an einer ihrer Längswandungen (10) ein Befestigungs-Element umfasst, mit dem ein in die Aufnahme (9) gestecktes mobiles Telekommunikationsendgerät (8) gehalten wird.

9. Kombination nach Anspruch 8,
**dadurch gekennzeichnet,**
**dass** das Befestigungs-Element eine exzentrisch gelagerte Walze ist.

10. Anordnung zur Verdeckung einer Öffnung für die Eingabe eines Pfandes, **umfassend**
ein mobiles Telekommunikationsendgerät (8), welches in der Aufnahme einer Kombination (1, 6) gemäß einem der Ansprüche 1 bis 9 gehalten ist.

## Claims

1. Combination of a pushing handle for a shopping trolley and a deposit lock, wherein held on the pushing handle (1) is the deposit lock (6) which has an opening (7) for inserting the deposit, and wherein the pushing handle (1) comprises a receptacle (9) for a mobile telecommunications transmitter device (8)
**characterised in that**
the receptacle (9) for the mobile telecommunications transmitter device (8) is arranged on the side of the pushing handle (1)facing away from the shopping trolley in front of the opening (7) for inserting the deposit.

2. Combination according to claim 1
**characterised in that**
the receptacle (9) for the mobile telecommunications transmission device (8) formed by a recess produced in the pushing handle (1).

3. Combination according to claim 1 or 2
**characterised in that**
the receptacle (9) on the side facing away from the shopping trolley comprises a, in particular centrally arranged, trough-shaped recess (11).

4. Combination according to any one of the preceding claims
**characterised in that**
the longitudinal walls (10) of the receptacle are arranged at an angle to the perpendicular so that a mobile telecommunications transmission device (8) held in the receptacle (9) is inclined with regard to the user of the shopping trolley standing in front of the pushing handle (1).

5. Combination according to claim 4
**characterised in that**
the receptacle (9) and the deposit lock (8) are integrated into a shaped area (3) which is provided on the pushing handle (1) for a functional element, in particular an advertising display (4).

6. Combination according to any one of the preceding claims
**characterised in that**
the receptacle (9) comprises a displaceably borne limiting element laterally arranged in the receptacle (9).

7. Combination according to claim 6
**characterised in that**
the displaceably borne limiting element is a springloaded slide.

8. Combination according to any one of the preceding claims
**characterised in that**
on one of its longitudinal walls (10) the receptacle (9) comprises a fastening element with which the mobile telecommunications transmission device (8) inserted into the receptacle (9) is held.

9. Combination according to claim 8
**characterised in that**
the fastening element is an eccentrically borne roller.

10. Assembly for covering an opening for inserting a deposit
comprising
a mobile telecommunications transmission device (8) which is held in the receptacle of a combination (1, 6) according to any one of claims 1 to 9.

## Revendications

1. Combinaison composée d'une poignée coulissante pour un chariot de supermarché (désigné également « caddy ») et une serrure à consigne, la serrure à consigne (6) étant fixée sur la poignée coulissante (1), qui comporte une ouverture (7) pour introduire l'élément de consigne et la poignée coulissante (1) comprenant un logement (9) pour un terminal mobile de télécommunication (8), **caractérisée en ce que** le logement (9) pour le terminal mobile de télécommunication (8) est disposé sur le côté de la poignée coulissante (1), opposé au chariot, avant l'ouverture (7) pour l'introduction de l'élément de consigne.

2. Combinaison selon la revendication 1, **caractérisée en ce que** le logement (9) pour le terminal mobile de télécommunication (8) est constitué par une cavité formée dans la poignée coulissante (1).

3. Combinaison selon la revendication 1 ou 2, **caractérisée en ce que** le logement (9) comprend, sur le côté opposé au chariot, un évidement (11) en forme de berceau, notamment disposée au centre.

4. Combinaison selon l'une quelconque des revendications précédentes, **caractérisée en ce que** les cloisons longitudinales (10) du logement sont disposées dans un angle par rapport à la perpendiculaire de telle manière qu'une terminal mobile de télécommunication (8) fixé dans le logement (9) est incliné vers l'utilisateur du chariot se trouvant devant la poignée coulissante (1).

5. Combinaison selon la revendication 4, **caractérisée en ce que** le logement (9) et la serrure à consigne (8) sont intégrés dans une conformation (3), qui est prévue sur la poignée coulissante (1) pour un élément de fonctionnement, notamment un affichage publicitaire (4).

6. Combinaison selon l'une quelconque des revendications précédentes, **caractérisée en ce que** le logement comprend un élément de délimitation disposé latéralement dans le logement (9), logé de façon mobile.

7. Combinaison selon la revendication 6, **caractérisée en ce que** l'élément de délimitation logé de façon mobile est un coulisseau sous tension de ressort.

8. Combinaison selon l'une quelconque des revendications précédentes, **caractérisée en ce que** le logement (9) comprend sur une de ses parois longitudinales (10) un élément de fixation avec lequel est maintenu un terminal mobile de télécommunication (8) enfiché dans le logement (9).

9. Combinaison selon la revendication 8, **caractérisée en ce que** l'élément de fixation est un cylindre logé de façon excentrique.

10. Agencement pour la couverture d'une ouverture pour l'introduction d'un élément de consigne comprenant un terminal mobile de télécommunication (8), lequel est maintenu dans le logement d'une combinaison (1,6) selon l'une quelconque des revendications 1 à 9.
